# EUROPÄISCHE PATENTSCHRIFT

(11) **EP 0 426 938 B1**
(45) Veröffentlichungstag und Bekanntmachung des Hinweises auf die Patenterteilung: **06.04.1994**
(21) Anmeldenummer: 90109972.1
(22) Anmeldetag: 25.05.1990
(51) Int. Cl.: F16F 13/00

(54) **Gummilager mit hydraulischer Dämpfung**
Rubber mounting with hydraulic damping
Support de gomme avec dispositif hydraulique pour l'amortissement

(30) Priorität: 09.11.1989 DE 3937332
(43) Veröffentlichungstag der Anmeldung: 15.05.1991
(73) Patentinhaber: Firma Carl Freudenberg, 69469 Weinheim (DE)
(72) Erfinder: Hanmaekers, Arno, D-6946 Gorxheimertal (DE); Rudolf, Hans-Joachim, D-2902 Rastede (DE); Simuttis, Arnold, Dr., D-6550 Bad Kreuznach (DE)

(56) Entgegenhaltungen:
- EP-A- 0 255 434
- DE-A- 3 831 816
- DE-B- 2 659 844
- US-A- 4 401 298
- US-A- 4 773 634

## Beschreibung

Die Erfindung betrifft ein Gummilager mit hydraulischer Dämpfung, bei dem ein Auflager, ein ringförmig ausgebildetes Federelement aus gummielastischem Werkstoff und ein Traglager einen Arbeitsraum umschließen, der durch eine erste Dämpfungsöffnung mit einem Ausgleichsraum verbunden ist, wobei der Ausgleichsraum auf der dem Arbeitsraum abgewandten Seite durch einen Rollbalg begrenzt ist, wobei der Arbeitsraum, der Ausgleichsraum und die Dämpfungsöffnung mit Flüssigkeit gefüllt sind, wobei das Federelement wenigstens zwei Teilfedern umfaßt, die die Bewegungsachse im wesentlichen hohlkegelig umschließen und mit den einander zugewandten Enden an einem formstabilen Verbindungsglied festgelegt und einander in einer Reihenschaltung zugeordnet sind, wobei die Teilfedern dem Verbindungsglied und einer Ebene, die sich quer zur Bewegungsachse erstreckt, im wesentlichen spiegelbildlich zugeordnet sind und wobei das Verbindungsglied von einer zweiten Dämpfungsöffnung durchdrungen ist.

Ein solches Motorlager ist aus der DE 38 31 816 A1 bekannt. Durch das Zusammenwirken der beiden Teilfedern, die das Federelement bilden, sind die Einfederungswege beträchtlich, wobei leerlaufbedingte, akustisch störende Schwingungen durch ein in Richtung der eingeleiteten Schwingungen beweglicher Membran isoliert werden, die in einem gitterartigen Käfig aufgenommen ist, der zwischen dem Arbeitsraum und dem Ausgleichsraum zur Bildung einer Trennwand angeordnet ist. Die Dämpfung tieffrequenter Schwingungen, die beispielsweise durch Schüttelbewegungen des Motors und/oder Stoßvibrationen hervorgerufen werden, werden im wesentlichen dadurch reduziert, daß sich Flüssigkeitsbestandteile aus dem Arbeitsraum durch den Dämpfungskanal in den angrenzenden Ausgleichsraum bewegen.

Der Erfindung liegt die Aufgabe zugrunde, ein solches Motorlager derart weiterzuentwickeln, daß bei Gewährleistung großer Einfederungsweg eine verbesserte Dämpfungswirkung erzielbar ist.

Diese Aufgabe wird erfindungsgemäß bei einem Motorlager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Motorlager ist der Rollbalg in seinem zentralen Bereich von einer Stange flüssigkeitsdicht durchdrungen und durch die Stange mit dem Traglager verbunden. Relativverlagerungen des Traglagers in bezug auf das Auflager werden hierdurch unmittelbar auf den Ausgleichsraum übertragen, was die Hin- und Herverlagerung der in der Dämpfungsöffnung enthaltenen Flüssigkeitssäule bei Einleitung von tieffrequenten, zu dämpfenden Schwingungen begünstigt. Die Länge der Stange und die elastische Nachgiebigkeit des Rollbalgs sind so bemessen und aufeinander abgestimmt, daß in dem Ausgleichsraum und den damit verbundenen weiteren Räumen stets ein den atmosphärischen Druck übersteigender Druck herrscht. Hierdurch wird dem Auftreten von Kavitationserscheinungen in dem Gummilager vorgebeugt. Die Anzahl der Teilfedern ist beliebig, was es zuläßt, große Einfederungswege bei einem vergleichbar geringen Außendurchmesser des Motorlagers zu realisieren. Dabei ist zwischen jedem Paar aufeinanderfolgender Teilfedern ein Verbindungsglied vorgesehen, welches von einer zweiten Dämpfungsöffnung durchdrungen ist. Die sich hierdurch insgesamt ergebenden Dämpfungsöffnungen sind in einer Reihenschaltung angeordnet, einander jedoch nicht in einer starren Weise zugeordnet, sondern relativ verschiebbar. Hierdurch sowie durch eine voneinander abweichende Dimensionierung läßt sich eine gute Dämpfungswirkung in einem deutlich aufgeweiteten Frequenzbereich erzielen. Dabei ist es von hervorzuhebender Bedeutung, daß die üblicherweise zur Isolierung akustisch wirksamer, hochfrequenter Schwingungen zur Anwendung gelangenden Mittel in gleicher Weise gestaltet werden können wie bisher. Sie können beispielsweise eine zwischen Anschlägen leicht bewegliche Scheibe umfassen, welche den Arbeitsraum an wenigstens einer Stelle begrenzt.

Die Teilfedern können das Verbindungsglied im Bereich ihres kleinsten Durchmessers berühren. Verwendungsbedingte Verkantungen des Auflagers in bezug auf das Traglager werden hierdurch leichter ausgeglichen und die Schwingungsisolierung verbessert.

Das Verbindungsglied kann zugleich eine Trägheitsmasse bilden, welche bei Einleitung von Schwingungen in das Motorlager einer frei bestimmbaren Frequenz in eine Resonanzbewegung verletzbar ist. Die schwingungstechnische Abkoppelung des Auflagers von dem Traglager wird hierdurch verbessert.

Durch eine blendenartige Gestaltung der zweiten Dämpfungsöffnung läßt sich eine besonders breitbandige Dämpfungswirkung erzielen. Daneben ist es möglich, die zweite Dämpfungsöffnung gegebenenfalls kanalartig zu gestalten und so zu dimensionieren, daß die enthaltene Flüssigkeitsmasse bei Einleitung von Schwingungen einer frei bestimmbaren Frequenz in eine Resonanzbewegung gelangt. Besonders störend in Erscheinung tretende Schwingungen einer solchen Frequenz lassen sich hierdurch wirksam bedämpfen.

Das Verbindungsglied kann aus zwei Teilgliedern bestehen, die bei der Formgebung und Verfestigung der Teilfedern mit den Teilfedern verbunden und hiervon unabhängig miteinander verbunden sind, beispielsweise durch eine gegenseitige Vernietung oder Verschraubung. Die Herstellung des erfindungsgemäßen Motorlagers wird hierdurch stark vereinfacht.

Der Gegenstand der Erfindung wird nachfolgend anhand der als Anlage beigefügten Zeichnung weiter verdeutlicht.

Diese zeigt eine beispielhafte Ausführung des Gummilagers.

Das in der Zeichnung gezeigte Gummilager dient der Abstützung der Karosserie auf der Radaufhängung eines Kraftfahrzeuges. Es besteht aus dem Auflager 1, an dem während der bestimmungsgemäßen Verwendung die Karosserie befestigt ist, und dem Traglager 3, welches auf Federn bzw. Dämpfern des Radlenkers abgestützt ist. Das Gummilager kann auch als Verbindungselement zwischen dem Motorlager und der Karosserie oder dem Fahrwerk eingesetzt werden.

Das Auflager 1 und das Traglager 3 sind durch ein hohlkegelig gestaltetes Federelement 2 aufeinander abgestützt, welches zwei Teilfedern 2.1, 2.2 umfaßt, die dem Verbindungsglied 8 und einer sich quer zur Bewegungsachse 7 erstrekkenden Ebene im wesentlichen spiegelbildlich zugeordnet sind. Das Verbindungsglied 8 ist in Richtung der Bewegungsachse 7 von einer Dämpfungsöffnung 9 durchdrungen, die die Teilräume 4.1 und 4.2 des Arbeitsraumes untereinander verbindet.

An dem Auflager 1 ist oberhalb des Teilraumes 4.1 des Arbeitsraumes eine Trennwand 11 befestigt, die den Teilraum 4.1 von dem Ausgleichsraum 6 trennt. Die Trennwand 11 besteht aus einer unnachgiebigen Gitterplatte aus metallischem Werkstoff, welche im Bereich ihres Außenumfanges von der gewendelt verlaufenden, ersten Dämpfungsöffnung 5 durchdrungen ist. Die Dämpfungsöffnung 5 ist kanalartig gestaltet und so dimensioniert, daß sich bei Einleitung von Schwingungen einer bevorzugt zu dämpfenden Frequenz eine Resonanzbewegung der in der ersten Dämpfungsöffnung 5 enthaltenen Flüssigkeitssäule ergibt, was eine gute Dämpfung solcher Schwingungen gewährleistet.

Im mittleren Bereich wird die Trennwand 11 durch einen Gitterkäfig gebildet, der eine Kompensationswand 12 umschließt. Diese ist beim Auftreten von Differenzdrücken zwischen dem Ausgleichsraum und dem Teilraum 4.1 in Richtung der Bewegungsachse 7 leicht verschiebbar, wobei das zur Verfügung stehende Spiel so bemessen ist, daß bei Einleitung von akustisch störenden, hochfrequenten Schwingungen einer Frequenz von wenigstens 30 Hz eine Berührung der Anschlaggitter vermieden wird. Tatsächliche Drucksteigerungen in dem Teilraum 4.1 und in dem Ausgleichsraum 6 werden hierdurch bei Einleitung solcher Schwingungen vermieden, was deren gute Isolierung bewirkt.

Der Ausgleichsraum 6 ist nach außen durch einen Rollbalg 14 abgeschlossen, der im mittleren Bereich mit einer Armierung versehen und durch eine die Trennwand 11 durchdringende Stange 13 mit dem Traglager 3 verbunden ist. Relativverlagerungen des Traglagers 3 in bezug auf das Auflager 1 werden hierdurch unmittelbar auf den Ausgleichsraum 6 übertragen, was die Hin- und Herverlagerung der in der Dämpfungsöffnung 5 enthaltenen Flüssigkeitssäule bei Einleitung von tieffrequenten, zu dämpfenden Schwingungen begünstigt. Die Länge der Stange 13 und die elastische Nachgiebigkeit des Rollbalges 14 sind so bemessen und aufeinander abgestimmt, daß in dem Ausgleichsraum 6 und den damit verbundenen weiteren Räumen stets ein den atmosphärischen Druck übersteigender Durck herrscht. Hierdurch wird dem Auftreten von Kavitationserscheinungen in dem Gummilager vergebeugt. Der Rollbalg 14 ist in einer metallischen Schutzkappe 16 angeordnet, welche von Bohrungen 15 durchdrungen ist. Der Zwischenraum steht dadurch mit der Atmosphäre in Verbindung. Alle übrigen Hohlräume sind mit einer hydraulischen Flüssigkeit gefüllt, vorzugsweise mit einem Gemisch aus Glykol und Wasser.

Zur Funktion ist folgendes auszuführen:
Durch die Reihenschaltung der Teilfedern 2.1 und 2.2 können in dem gezeigten Gummilager Schwingungen großer Amplituden aufgenommen werden, ohne daß sich eine übermäßige Deformierung der Teilfedern 2.1, 2.2 ergibt. Hierdurch wird eine gute Dauerhaltbarkeit bei ständiger Einleitung von Schwingungen dieser Art erreicht. Bei einer Einleitung von Schwingungen großer Amplitude ergibt sich eine elastische Verformung der Teilfedern 2.1 und 2.2 sowie des Rollbalges 14. Sowohl im Bereich der Dämpfungsöffnung 9 als auch 5 ergibt sich hierdurch eine Dämpfungswirkung.

Zwischen den Teilfedern 2.1 und 2.2 ist das aus metallischem Werkstoff bestehende Verbindungsglied 8 angeordnet, welches eine große Trägheitsmasse aufweist und hierdurch eine Übertragung akustisch störender Schwingungen von der einen Teilfeder 2.1 auf die andere Teilfeder 2.2 verhindert. Die Isolierung derartiger Schwingungen ist dementsprechend verbessert.

Die Teilfedern 2.1 und 2.2 sind hohlkegelig gestaltet und im Bereich ihres kleinsten Durchmessers mit dem Verbindungsglied 8 verbunden. Hieraus resultiert eine gute Winkelbeweglichkeit, was auch beim Auftreten von betriebsbedingten Verkantungserscheinungen eine gute Isolierung akustisch störender Schwingungen bedingt.

Das Traglager 3 ist im Bereich seiner Einbindung in die zweite Teilfeder 2.2 mit einem radial nach außen vorstehenden, umlaufenden Kranz 23 versehen, der von radial nach innen weisenden Vorsprüngen 17 des Auflagers 1 in Richtung der Bewegungsachse 7 in Abständen beiderseits umgriffen ist. Hierdurch werden Endanschläge gebildet, was einer Beschädigung des Motorlagers und insbesondere der Teilfedern 2.1 und 2.2 bei betriebsbedingten Überlastungen vorbeugt.

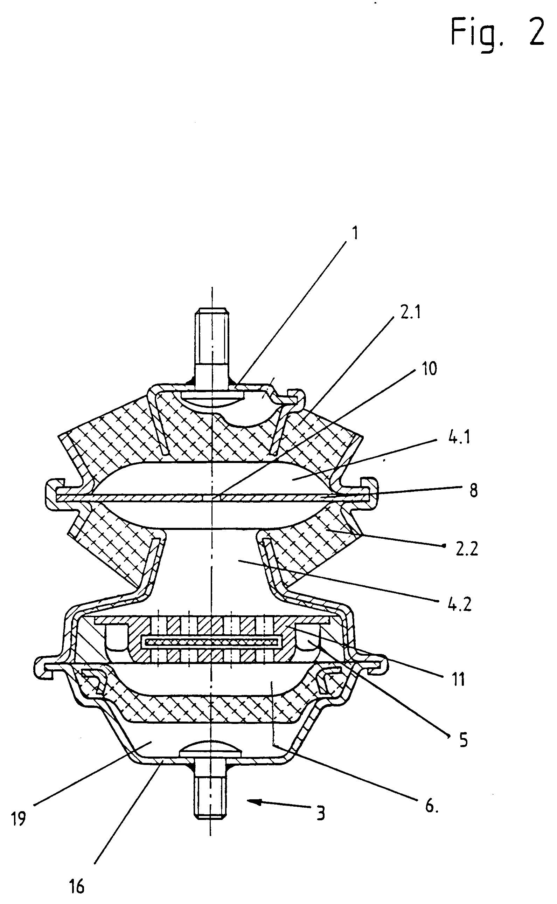

In Figur 2 ist eine Ausführung gezeigt, die sich von der vorstehend beschriebenen dadurch unterscheidet, daß die Teilfedern 2.1 und 2.2 das Verbindungsglied 8 im Bereich ihres größten Durchmessers berühren. Hierdurch wird eine gute Führung des Auflagers 1 durch das Traglager 3 erreicht.

Das Verbindungsglied 8 besteht in seinem mittleren Bereich aus einer Blendenscheibe, die von der zweiten Dämpfungsöffnung durchdrungen ist. Die zweite Dämpfungsöffnung ist als Blendenöffnung 10 gestaltet, was die Erzielung einer breitbandigen Dämpfungswirkung begünstigt.

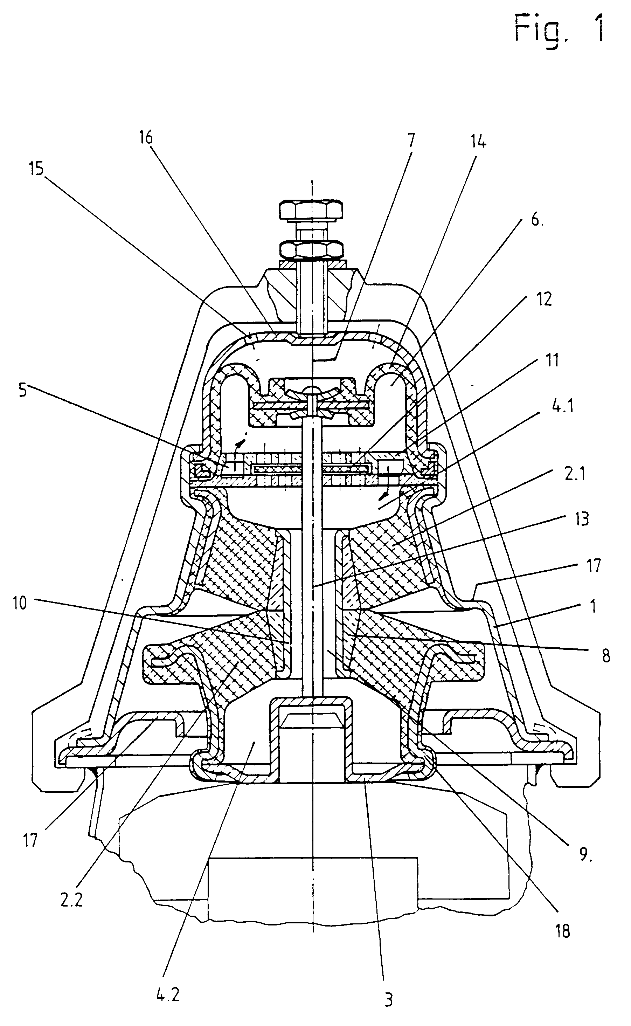

Die starr an dem Traglager 3 festgelegte Trennwand 11 ist entsprechend der Ausführung nach Figur 1 gestaltet. Auch in diesem Falle ist eine kanalartig ausgebildete Verbindungsöffnung zwischen dem Teilraum 4.2 und dem Ausgleichsraum 6 vorgesehen, welche die erste Dämpfungsöffnung 5 bildet.

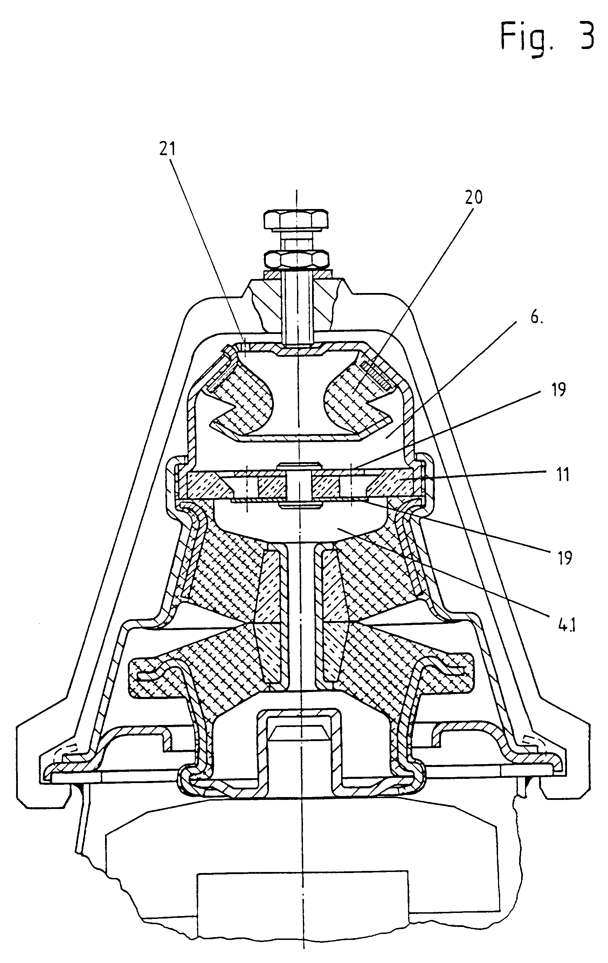

Der Ausgleichsraum 6 ist nach außen von dem elastischen Hohlkörper 19 begrenzt. Nach dem Aufbringen der während der bestimmungsgemäßen Verwendung zu tragenden, statischen Belastung ergibt sich dadurch in den flüssigkeitsgefüllten Innenräumen ein Druckanstieg, der das Auftreten von Kavitationserscheinungen bei der Einleitung von Schwingungen verhindert. Die in Figur 3 gezeigte Ausführung ist der in Figur 1 gezeigten Ausführung in konstruktiver Hinsicht ähnlich. Abweichend gestaltet ist jedoch die Trennwand 11, welche zwischen dem Teilraum 4.1 und dem Ausgleichsraum 6 angeordnet ist. Sie wird durch eine Ventilplatte gebildet, bei der die Ventile 19 eine in Richtung des Ausgleichsraumes 6 größere Durchlässigkeit haben als in Richtung des Teilraumes 4.1. Plötzlich auftretende Druckstöße können hierdurch weichelastisch aufgefangen werden.

Der Ausgleichsraum 6 ist überwiegend durch eine unnachgiebige Wandung umschlossen. Er enthält einen Federbalg 20, der bei einer Einspeisung zusätzlichen Flüssigkeitsvolumens zusammendrückbar ist und hierbei eine elastische Vorspannung erfährt. Der von dem Federbalg 20 umschlossene Hohlraum ist durch eine Entlüftungsöffnung 21 mit der Atmosphäre verbunden. Die Entlüftungsöffnung 21 kann wahlweise verschlossen sein, was die Nachgiebigkeit des Federbalges 20 vermindert und die Tragfähigkeit des gezeigten Motorlagers erhöht.

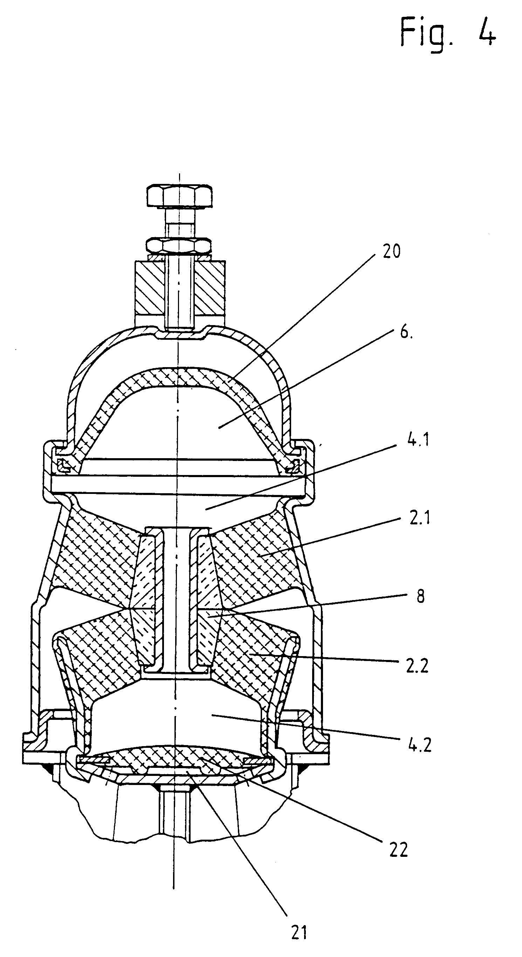

Die in Figur 4 beschriebene Ausführung ist der vorstehend beschriebenen ähnlich. Der den Ausgleichsraum 6 begrenzende Federbalg 20 ist jedoch von blasenförmiger Gestalt und läßt sich hierdurch vergleichsweise einfacher erzeugen. Zusätzlich ermöglicht seine geringe Trägheitsmasse die Erzielung einer vergleichsweise verbesserten Isolierung akustisch störender Schwingungen.

Der Teilraum 4.2 des Arbeitsraumes ist nach außen durch eine Pufferwand 22 abgeschlossen, welche im mittleren Bereich auf Gumminoppen gelagert und leicht verformbar ist. Die Isolierung akustisch störender Schwingungen wird hierdurch verbessert.

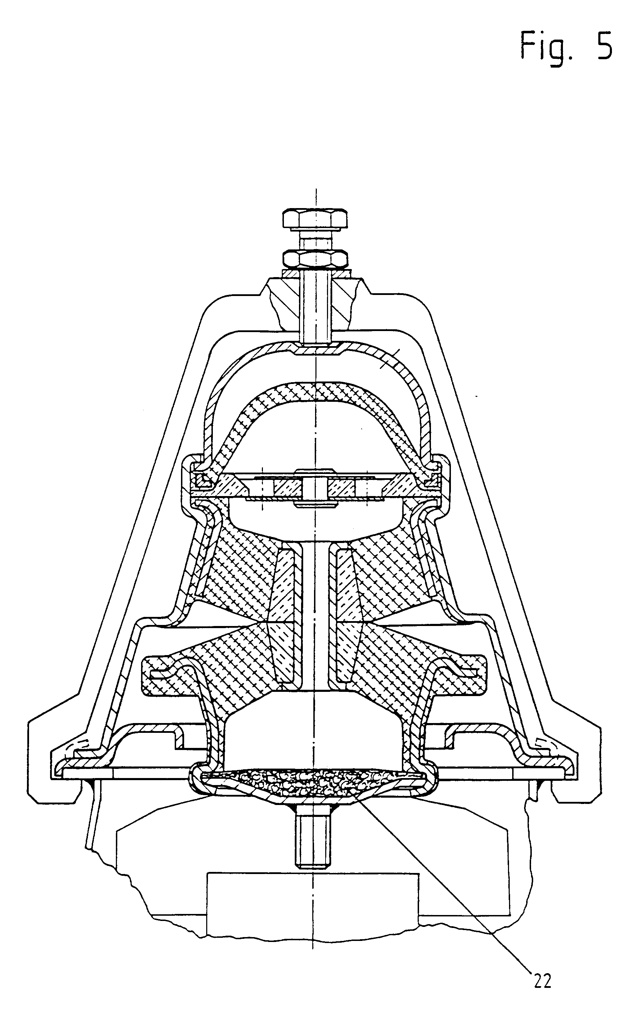

Die in Figur 5 gezeigte Ausführung entspricht der vorstehend beschriebenen. Abweichend ist die Pufferwand 22 aus einem geschlossenporigen Schaumstoffblock erzeugt. Hierdurch ergibt sich eine gute Dämpfung akustisch störender Schwingungen.

## Patentansprüche

1. Gummilager mit hydraulischer Dämpfung, bei dem ein Auflager (1), ein ringförmig ausgebildetes Federelement (2) aus gummielastischem Werkstoff und ein Traglager (3) einen Arbeitsraum (4) umschließen, der durch eine erste Dämpfungsöffnung (5) mit einem Ausgleichsraum (6) verbunden ist, wobei der Ausgleichsraum (6) auf der dem Arbeitsraum (4) abgewandten Seite durch einen Rollbalg (14) begrenzt ist, wobei der Arbeitsraum (4), der Ausgleichsraum (6) und die Dämpfungsöffnung (5) mit Flüssigkeit gefüllt sind, wobei das Federelement (2) wenigstens zwei Teilfedern (2.1, 2.2) umfaßt, die die Bewegungsachse (7) im wesentlichen hohlkegelig umschließen und mit den einander zugewandten Enden an einem formstabilen Verbindungsglied (8) festgelegt und einander in einer Reihenschaltung zugeordnet sind, wobei die Teilfedern (2.1, 2.2) dem Verbindungsglied (8) und einer Ebene, die sich quer zur Bewegungsachse (7) erstreckt, im wesentlichen spiegelbildlich zugeordnet sind und wobei das Verbindungsglied (8) von einer zweiten Dämpfungsöffnung (9) durchdrungen ist, dadurch gekennzeichnet, daß der Rollbalg (14) in seinem zentralen Bereich von einer Stange (13) flüssigkeitsdicht durchdrungen und durch die Stange (13) mit dem Traglager (3) verbunden ist.

2. Gummilager nach Anspruch 1, dadurch gekennzeichnet, daß die Teilfedern (2.1, 2.2) das Verbindungsglied (8) im Bereich ihres kleinsten Durchmessers berühren.

3. Gummilager nach Anspruch 1 bis 2, dadurch gekennzeichnet, daß das Verbindungsglied (8) eine Trägheitsmasse bildet, die bei Einleitung von Schwingungen einer frei bestimmbaren Frequenz in eine Resonanzbewegung versetzbar ist.

4. Gummilager nach Anspruch 1 bis 3, dadurch gekennzeichnet, daß die zweite Dämpfungsöffnung (9) als Blendenöffnung (10) gestaltet ist.

5. Gummilager nach Anspruch 1 bis 3, dadurch gekennzeichnet, daß die zweite Dämpfungsöffnung (9) kanalartig gestaltet und so dimensioniert ist, daß die enthaltene Flüssigkeitsmasse bei Einleitung von Schwingungen einer frei bestimmbaren Frequenz in eine Resonanzbewegung versetzbar ist.

6. Gummilager nach Anspruch 1 bis 5, dadurch gekennzeichnet, daß das Verbindungsglied (8) aus zwei Teilgliedern (8.1, 8.2) besteht, die bei der Formgebung und Verfestigung der Teilfedern (2.1; 2.2) mit den Teilfedern (2.1, 2.2) verbunden und hiervon unabhängig miteinander verbunden sind.

7. Gummilager nach Anspruch 6, dadurch gekennzeichnet, daß die Teilglieder (8.1, 8.2) durch einen Hohlniet (10) verbunden sind.

## Claims

1. A rubber bearing having hydraulic damping, in which a mounted bearing (1) encloses an annularly configured spring element (2) made from elastomeric material and a supporting bearing (3) encloses a working space (4) which is connected by a first damping opening (5) to an equalizing space (6), the equalizing space (6) being limited, on the side facing away from the working space (4), by a roll bellows (14), the working space (4), the equalizing space (6) and the damping opening (5) being filled with liquid and the spring element (2) comprising at least two part-springs (2.1, 2.2) which enclose the motional axis (7) essentially in the form of a hollow cone and are secured, by the mutually facing ends, to a dimensionally stable connecting member (8) and are assigned to one another in series connection, the part-springs (2.1, 2.2) being assigned, in an essentially mirror image of each other, to the connecting member (8) and to a plane extending transversely to the motional axis (7) and the connecting member (8) being penetrated by a second damping opening (9), characterized in that the roll bellows (14) is penetrated in its central region, in a liquid-tight arrangement, by a rod (13) and is connected by the rod (13) to the supporting bearing (3).

2. A rubber bearing according to claim 1, characterized in that the part-springs (2.1, 2.2) touch the connecting member (8) in the region of their minimum diameter.

3. A rubber bearing according to either of claims 1 and 2, characterized in that the connecting member (8) forms a mass of inertia which, upon the induction of vibrations of a freely determinable frequency, can be translated into a resonance motion.

4. A rubber bearing according to any of claims 1 to 3, characterized in that the second damping opening (9) is designed as a diaphragm opening (10).

5. A rubber bearing according to any of claims 1 to 3, characterized in that the second damping opening (9) is designed like a duct and is dimensioned such that the contained liquid mass, upon the induction of vibrations of a freely determinable frequency, can be translated into a resonance motion.

6. A rubber bearing according to any of claims 1 to 5, characterized in that the connecting member (8) is composed of two part-members (8.1, 8.2) which, upon the shaping and stiffening of the part-springs (2.1, 2.2), are connected to the part-springs (2.1, 2.2) and are joined together independently therefrom.

7. A rubber bearing according to claim 6, characterized in that the part-members (8.1, 8.2) are connected by a tubular rivet (10).

## Revendications

1. Support en caoutchouc avec amortissement hydraulique, dans lequel un organe d'appui (1), un élément formant ressort (2), de forme annulaire et constitué d'une matière ayant l'élasticité du caoutchouc, ainsi qu'un organe porteur (3) entourent une chambre de travail (4), qui est reliée à une chambre d'équilibrage (6) par une première ouverture d'amortissement (5), la chambre d'équilibrage (6) étant délimitée du côté opposé à la chambre de travail (4) par un soufflet enroulable (14), la chambre de travail (4), la chambre d'équilibrage (6) et l'ouverture d'amortissement (5) étant remplies d'un liquide, l'élément formant ressort (2) comportant au moins deux ressorts partiels (2.1, 2.2), qui entourent l'axe de mouvement (7) sensiblement en forme de cône creux et dont les extrémités dirigées l'une vers l'autre sont fixées sur un organe de liaison (8) de forme stable, et qui sont associés mutuellement dans une disposition en série, les ressorts partiels (2.1, 2.2) étant associés de façon sensiblement symétrique à l'organe de liaison (8) et à un plan qui est orienté perpendiculairement à l'axe de mouvement (7), et l'organe de liaison (8) étant traversé par une seconde ouverture d'amortissement (9), caractérisé en ce que le soufflet enroulable (14) est traversé de façon étanche au liquide,dans sa zone centrale, par une tige (13) et est relié par cette tige (13) à l'organe porteur (3).

2. Support en caoutchouc selon la revendication 1, caractérisé en ce que les ressorts partiels (2.1, 2.2) sont en contact avec l'organe de liaison (8) dans la zone de son plus petit diamètre.

3. Support en caoutchouc selon une des revendications 1 et 2, caractérisé en ce que l'organe de liaison (8) constitue une masse d'inertie qui peut être mise en mouvement de résonance lors de l'application d'oscillations d'une fréquence librement déterminable.

4. Support en caoutchouc selon les revendications 1 à 3, caractérisé en ce que la seconde ouverture d'amortissement (9) est agencée comme une ouverture formant diaphragme (10).

5. Support en caoutchouc selon les revendications 1 a 3, caractérisé en ce que la seconde ouverture d'amortissement (9) est agencée en forme de canal et est dimensionnée de telle sorte que la masse de liquide contenue puisse être mise en mouvement de résonance lors de l'application d'oscillations d'une fréquence librement déterminable.

6. Support en caoutchouc selon les revendications 1 à 5, caractérisé en ce que l'organe de liaison (8) se compose de deux organes partiels (8.1, 8.2) qui, lors de la formation et de la solidification des ressorts partiels (2.1, 2.2) sont reliés avec les ressorts partiels (2.1, 2.2) et qui, indépendamment de cela, sont reliés entre eux.

7. Support en caoutchouc selon la revendication 6, caractérisé en ce que les organes partiels (8.1, 8.2) sont reliés par un rivet creux (10).
